# EUROPÄISCHE PATENTSCHRIFT

(11) **EP 2 660 210 B1**
(45) Veröffentlichungstag und Bekanntmachung des Hinweises auf die Patenterteilung: **31.05.2017**
(21) Anmeldenummer: 13166505.1
(22) Anmeldetag: 03.05.2013
(51) Int. Cl.: C03B 9/193, C03B 9/195

(54) **Herstellung von Hohlkörpern aus einer Glasschmelze**
Manufacture of hollow bodies from a glass melt
Fabrication de corps creux à partir d'une fonte de verre

(30) Priorität: 04.05.2012 DE 102012103957
(43) Veröffentlichungstag der Anmeldung: 06.11.2013
(73) Patentinhaber: Waltec Maschinen GmbH, 96352 Wilhelmsthal-Steinberg (DE)
(72) Erfinder: Zirfas, Ulrich, 96352 Wilhelmthal (DE); Bassing, Werner, 96364 Marktrodach (DE); Thron, Ralf, 96317 Kronach (DE); Höllwarth, Falk, 96515 Sonneberg (DE); Wagner, Rainer, 95032 Hof (DE)
(74) Vertreter: LS-MP von Puttkamer Berngruber Loth Spuhler

(56) Entgegenhaltungen:
- DE-T2-602004 008 092
- DE-U1- 9 212 648
- JP-A- H11 209 129
- JP-A- 2000 007 351
- JP-A- 2004 149 350
- US-A- 3 910 419
- US-A- 5 266 093
- US-A- 5 766 292
- US-A- 6 079 226
- US-A1- 2005 252 245
- SCHWARZER S: "SERVO ELECTRIC HOT END SYSTEMS//MECANISMES SERVO-ELECTRIQUES EN BOUT CHAUD", VERRE, INSTITUT DU VERRE, PARIS, FR, vol. 11, no. 3, 1 June 2005 (2005-06-01), pages 23-26, XP001233514, ISSN: 0984-7979
- Reinhard Kluger: "Zentral vs. dezentral", , 10 March 2008 (2008-03-10), XP055300296, Retrieved from the Internet: URL:http://www.elektrotechnik.vogel.de/zen tral-vs-dezentral-a-111496/ [retrieved on 2016-09-06]
- "SYSTEME DE COMMANDE FLEXIS", VERRE, INSTITUT DU VERRE, PARIS, FR, vol. 11, no. 3, 1 June 2005 (2005-06-01), page 14/15, XP001233510, ISSN: 0984-7979
- Anonymous ET AL: "Dezentrale Antriebstechnik - (k)ein neuer Trend - automation", , 1 March 2008 (2008-03-01), XP055300290, Retrieved from the Internet: URL:http://www.automationnet.de/index.cfm? pid=1702&pk=75787#.V87DQWP4IqM [retrieved on 2016-09-06]
- GRUENINGER W ET AL: "MODELLING, DESIGN AND IMPLEMENTATION OF A SERVO-ELECTRIC PLUNGER MECHANISM FOR GLASS CONTAINER FORMING MACHINES", GLASS TECHNOLOGY, SOCIETY OF GLASS TECHNOLOGY, SHEFFIELD, GB, vol. 43, no. 3, 1 June 2002 (2002-06-01), pages 89-94, XP001123096, ISSN: 0017-1050

## Beschreibung

Vorrichtung zur Herstellung von Hohlkörpern aus einer Glasschmelze mit einer, der Aufnahme eines Tropfens einer Glasschmelze dienenden und den Kölbel formenden Vorform und einem den Kölbel aufnehmenden Neckring eines Neckringmechanismus sowie mit einer Kühleinrichtung zur Kühlung eines Plungers, wobei sich der Plunger innerhalb des Neckrings axial zur Vorform bewegt und servoangetrieben ist.

Aus der EP 0 789 00 4 B2 ist eine Vorrichtung zur Umformung eines Rohlings aus geschmolzenem Glas bekannt, die unter anderem einen Plunger offenbart, der über eine Leitspindel angetrieben wird, die innerhalb des Plungerzylinders angeordnet ist. Die Leitspindel ist mit einem Plunger verbunden, um diesen entlang eines geradlinigen Hubes zu und von dem Glasrohling zu verschieben. Die Leitspindel führt das Kontaktende des Plungers in-und außer Berührung mit dem Glasrohling.

Aus der DE 60 2004 008 092 T2 ist eine Press-Blasmaschine bekannt, die zur Herstellung hohler Glaswaren, Bechergläser oder Weingläser dient. Die Press-Blasmaschine umfasst ein Karussell, das eine Vielzahl von Blasstationen trägt, von denen jede zur Aufnahme von Vorformen ausgebildet ist. Die Press-Blasmaschine umfasst weiterhin einen Vorformhalter zur Aufnahme eines Glasrohlings, einen Halsring zum Halten des Glasrohlings und eine Antriebseinrichtung. Die Antriebseinrichtung dient dazu, eine formgebende Einheit aus einer Stillstandsposition in einen Transferbereich zu versetzen.

Andere bekannte Vorrichtungen zur Glasherstellung sehen großvolumige pneumatische Zylinder vor, um den Plunger in eine vertikale Bewegung zu versetzen. Das obere Ende des Zylinders bestimmt dabei die obere fixe Stellung des Plungers. Eine untere Endstellung des Plungers wird im Produktionszyklus durch den Widerstand der in der Vorform befindlichen Glasschmelze bestimmt. Neben dem Widerstand der Glasschmelze sind für die untere Endstellung des Plungers das Formenvolumen des Hohlkörpers sowie die in der Vorform befindliche Glasmenge entscheidend.

Bei weiteren im Stand der Technik bekannten Vorrichtungen zur Herstellung von Glaskörpern werden zur Bewegung der Vorform in der Regel großvolumige Zylinder eingesetzt, welche die Vorform vertikal zwischen einer ersten Endstellung, nämlich der Tropfenzuführungsposition, und einer zweiten Endstellung, nämlich der Pressposition, bewegen. Diese großvolumigen Zylinder haben durch die eingesetzte Pressluft einen sehr hohen Energieverbrauch.

Eine integrierte Kurvenmechanik verschwenkt weiterhin die Vorform zwischen der Tropfenzuführungsposition und der Pressposition. Um zufriedenstellende Produktionsergebnisse zu erzielen, müssen bei bekannten Vorrichtungen zur Herstellung von Glaskörpern diese Endstellungen exakt angefahren werden. Hierzu werden feste und einstellbare formschlüssige Führungen und Zentrierungen eingesetzt. Es ist gleichermaßen von Bedeutung, dass die Endstellungen weich angefahren werden. Die im Stand der Technik eingesetzten großvolumigen pneumatischen Zylinder verfügen über nicht ausreichende Dämpfungseigenschaften, um die Positionen weich anzufahren.

Um dies zu erreichen, werden im Stand der Technik in der Regel ölhydraulische Dämpfungselemente verwendet, die ihrerseits kostenintensiv und störanfällig sind, die aber bei notwendig werdenden Reparaturen bzw. Einstellungen schwer zugänglich sind.

Der Einsatz großvolumiger pneumatischer Zylinder erweist sich als nachteilig, da sich aufgrund der stetig ändernden Reibung, der erforderlichen Schmierung sowie des Verschleißes an Dichtungs- und Führungselementen die Zylindergeschwindigkeit und damit die verbundene kinetische Energie der vom Zylinder bewegten Masse ständig verändert. Es ist daher erforderlich, neben der Korrektur der Geschwindigkeit auch die Einstellung der hydraulischen Dämpfer zu verändern. Eine regelmäßige Nachjustierung der Einstellungen ist aufgrund des Verschleißes auch an den Führung und Zentrierungen erforderlich. Bei aus dem Stand der Technik bekannten Vorrichtungen zur Glasherstellung ist die Justierung der Einstellung bei laufendem Betrieb jedoch nicht möglich. Teilweise sind die einzustellenden Elemente ohne Demontage von Abdeckungen überhaupt nicht zugänglich. Überdies erfordert die Demontage der Abdeckungen die Stillsetzung der Maschine. Der Zeitdruck, die Maschine möglichst schnell wieder in Betrieb zu nehmen, führt zu einem weiteren Gefährdungspotential.

Bei weiteren im Stand der Technik bekannten Vorrichtungen zur Herstellung von Glaskörpern werden zur Bewegung des Plungers in der Regel großvolumige Zylinder eingesetzt, welche den Plunger bewegen. Diese großvolumigen Zylinder haben durch die eingesetzte Pressluft einen sehr hohen Energieverbrauch.

Der Einsatz großvolumiger pneumatischer Zylinder erweist sich als nachteilig, da sich aufgrund der stetig ändernden Reibung, der erforderlichen Schmierung sowie des Verschleißes an Dichtungs- und Führungselementen die Zylindergeschwindigkeit und damit die verbundene kinetische Energie der vom Zylinder bewegten Masse ständig verändert. Es ist daher erforderlich, die Geschwindigkeit durch Veränderung der Einstellung der Drosselventile zu korrigieren.

Die bei derartigen Vorrichtungen im Stand der Technik seit Jahrzehnten eingesetzten großvolumigen pneumatischen Zylinder erweisen sich schädlich für die Umwelt und die Maschinenbediener. Zur Reduzierung des Verschleißes erfordern sie eine intensive Schmierung mit Schmieröl. Ein Großteil des zugeführten Schmieröls wird durch den zyklischen Austausch der Luft mit der Umgebung wieder der Umgebungsluft zugeführt. Die Luft, die der Maschinenbediener einatmet, ist daher kontinuierlich durch Schmieröl kontaminiert. Stäube und abrasive Verlustanteile an eingesetzten Materialien sowie Ablagerungen an den Maschinen sind an diesen Vorrichtungen erfahrungsgemäß hoch. Verbindungen aus Ablagerungen und ölhaltiger Luft, die von den Zylindern ausgestoßen werden, ergeben ein hohes Unfallgefährdungspotential durch Rutschgefahr und sind darüber hinaus sehr leicht entzündlich.

Bei bekannten Vorrichtungen zur Herstellung von Hohlkörpern wird die vom pneumatischen Zylinder ausgehende Kraft nicht direkt auf den Plunger übertragen. Die Kraft wird vielmehr mithilfe einer einstellbaren Druckfeder bestimmt, die Teil eines Hebelmechanismus ist. Die auf den Plunger wirkende Kraft wird durch die Vorspannung der Druckfeder bestimmt. Mithilfe der Vorspannung kann die auf die Glasschmelze wirkende Kraft des Plungers vermindert und erhöht werden. Es erweist sich als nachteilig, dass die Verstellung der Vorspannung nicht skaliert ist. Überdies ist sie in späteren Arbeitsgängen nicht reproduzierbar. Zur Verstellung der Vorspannung ist im Stand der Technik vielfach zunächst eine Kontermutter zu lösen. In einem zweiten Schritt wird eine weitere Mutter verstellt, über die die Vorspannung direkt einstellbar ist. Wenn eine zufriedenstellende Veränderung der Vorspannung erreicht ist, wird die Einstellung durch Anziehen der Kontermutter fixiert und gesichert.

Aufgrund der hohen Umlaufgeschwindigkeit, mit der die Maschine zur Glasherstellung rotiert, ist die Verstellung der Vorspannung der Druckfeder bei bekannten Maschinen mit einem hohen Gefährdungspotenzial verbunden. Die Ausbildung und die Anordnung des Verstellmechanismus an der Maschine führen zu einem hohen Unfallrisiko. Es besteht die Gefahr, dass die mit der Einstellung der Vorspannung beschäftigten Arbeiter mit ihren Handschuhen oder ihrer Kleidung oder insbesondere mit ihren Gliedmaßen bzw. Haaren am Verstellmechanismus hängen bleiben und von der Maschine mitgezogen werden.

An bekannten Maschinen aus dem Stand der Technik sind weitere pneumatische Zylinder bekannt, die zu den vorgenannten großvolumigen, pneumatischen Zylindern koaxial angeordnet sind. Mithilfe des weiteren Zylinders kann der Plunger zum Ein- und Ausbau relativ zum weiteren Zylinder nach unten aus einem Neckringgehäuse herausgefahren werden.

Ein weiterer Nachteil an den aus dem Stand der Technik bekannten Plungervorrichtungen besteht darin, dass der Plunger mithilfe des großvolumigen pneumatischen Zylinders lediglich eine obere und eine untere Endstellung anfahren kann. Alternative Zwischenpositionen zwischen der oberen und der unteren Endstellung sind nach bekannten Konstruktionskonzepten nicht ansteuerbar.

Eine weitere Schwachstelle bekannter Vorrichtungen zur Herstellung von Hohlkörpern aus einer Glasschmelze offenbart sich aus dem Funktionszusammenhang zwischen dem Plungermechanismus und dem Neckringmechanismus. Der Neckring ist zwischen Plunger und Vorform angeordnet; seine Funktion ist es, den Vorformling bzw. Kölbel für den Zeitraum von der Formung bis zur Entnahme des Hohlkörpers durch den Takeout aufzunehmen. Im Stand der Technik wird der bekannte Blaskopf-Mechanismus ferner durch ein ebenfalls bekanntes Neckringgehäuse ersetzt, das eine geschlossene Bauweise aufweist. Der Einsatz geschlossener Neckringgehäuse führt zu einer Kapselung des Plungers. Hierdurch kann der Plunger vergleichsweise weniger Wärme nach außen abgeben. Die Möglichkeit, den Plunger mithilfe stationärer Luftkühldüsen gezielt von außen anzublasen und auf diese Weise zu kühlen, ist nicht mehr gegeben.

Alternativ wird bei bekannten Vorrichtungen zur Herstellung von Hohlkörpern aus einer Glasschmelze im Neckringgehäuse eine Kühlkammer vorgesehen. Die Kühlkammer ist durch Ausrichtung und Ausprägung der Kühlbohrungen definiert. Die Kühlbohrungen werden von einer einzigen Kühlluftquelle gespeist. Die Kühlung des Plungers durch eine Kühlkammer erweist sich jedoch als nachteilig, da der Plunger zur Kühlung in den Bereich seiner oberen Endstellung gebracht werden muss. Eine notwendige Veränderung der Anblasstelle erfordert bei bekannten Vorrichtungen den vollständigen Austausch der Kühlkammer.

Eine Veränderung der Anblasstelle des Plungers kann weiterhin nur durch Austausch der Kühlkammer erfolgen. Je nachdem, an welcher Stelle der Plunger während der Glasherstellung gekühlt werden soll, muss eine Kühlkammer eingesetzt werden, deren Kühlbohrungen entsprechend positioniert und ausgerichtet sind. Eine Veränderung der Ausrichtung der Kühlbohrungen an der eingebauten Kühlkammer ist weiterhin nicht möglich. Zum Auswechseln der Kühlkammer muss die Maschine stillgesetzt werden. Die Temperatur der Maschine und der zur Glasherstellung eingesetzten Werkzeuge sind unter die Betriebstemperatur abzusenken. Nach Austausch der Kühlkammer muss die Maschine erst wieder angefahren und auf ihre Betriebstemperatur gebracht werden, um Glasprodukte in der gewünschten Qualität produzieren zu können.

Auch beim Austausch der Kühlkammern beruht die Ausrichtung der Kühlbohrungen auf dem Prinzip Trial and Error. Es ist nicht gewährleistet, dass die jeweils eingebaute Kühlkammer den Plunger in der gewünschten Position und an der entsprechenden Stelle kühlt. Der Anpassungsvorgang muss daher zum Teil mehrfach hintereinander vollzogen werden. Geht man davon aus, dass eine Maschine zur Glasherstellung aus dem Stand der Technik typischerweise 12 oder 18 Sektionen umfasst, muss die Optimierung der Kühlung über den Austausch der Kühlkammer zunächst an einer Sektion durchgeführt werden. Wie oben beschrieben, muss die Prozedur der Anpassung zum Teil mehrmals hintereinander durchgeführt werden. Erst wenn die Kühlung des Plungers an einer Sektion in Bezug auf die Ausrichtung der Kühlbohrungen und auf die Intensität der Kühlung zufriedenstellend ist, können die Kühlkammern der übrigen Sektionen entsprechend angepasst werden. Die Anpassung aller Sektionen der Maschine zur Glasherstellung ist daher mit einem enormen Verlust an Produktionszeit verbunden.

Bei bekannten Vorrichtungen wird während der Formung des Hohlkörpers aus dem Kölbel das durch den Neckring gehaltene Kölbel durch Rotation des Neckrings ebenfalls in Rotation versetzt.

Bekannte Vorrichtungen verwenden hierzu typischer Weise frequenzgesteuerte Antriebe.

Während der Formung des Kölbels und während der Entnahme des Hohlkörpers wird diese Rotation stillgesetzt. Derartige Antriebe gestatten es nicht, dass die Rotation wiederhol-, positionsgenau und zeitlich schnell stillgesetzt wird.

Bekannte Vorrichtungen verwenden zur Verbesserung der Wiederholgenauigkeit und/oder zur Verkürzung der Zeit der Stillsetzung pneumatisch und/oder elektromagnetisch betriebene Kupplungs-Bremskombinationen. Derartig ausgeführte Vorrichtungen sind einem mechanisch hohen Verschleiß unterworfen und benötigen weiter Sensoren welche den Bremsvorgang bei Stillsetzung der Rotation auslösen.

Bei bekannten Vorrichtungen zur Glasherstellung werden Plunger mithilfe einer Gewindeverbindung am Plungermechanismus befestigt. Der Nachteil besteht darin, dass der Maschinenbediener zum Lösen und Festziehen ein Werkzeug benötigt. Zur Bedienung des Werkzeugs benötigt der Maschinenbediener beide Hände. Mit der einen Hand löst er die Verbindung bzw. zieht er die Verbindung fest. Gleichzeitig greift der mit seiner zweiten Hand den Plunger. Die Gefahr besteht nun darin, dass er keine freie Hand zur Verfügung hat, um sich selber abzustützen. Darüber hinaus läuft er Gefahr, sich mit dem heißen Wasser, das sich in der Kühlkammer des Plungers befindet, zu verbrühen. Zum Austausch des Plungers wird die Plungerkühlung abgestellt. Die noch im Plunger gespeicherte Wärme überhitzt das im Plunger befindliche Kühlwasser, welches nach Lösen der Gewindeverbindung aus dem Kühlsystem als heißer Dampf austreten und zu Verbrennungen führen kann.

Es ist daher die Aufgabe der Erfindung, eine Vorrichtung zur Herstellung von Hohlkörpern aus einer Glasschmelze bereitzustellen, bei der der Plunger während des Herstellungsvorgangs und zu Wartungszwecken relativ zu anderen Bestandteilen der Maschine, wie zum Beispiel dem Neckring oder der Vorform exakt und positionsgenau zwischen zwei Endstellungen bewegt werden kann. Es wird eine technisch vereinfachte und kostengünstig arbeitende Vorrichtung angestrebt, bei der ein Verzicht auf hydraulische Dämpfer sowie energetische Einsparungen möglich ist. Weiterhin soll eine Standardisierung von Bauteilen erreicht werden, die bevorzugt zu einer verbesserten Reproduzierbarkeit der Betriebsabläufe der Maschine führt. Eine weitere Aufgabe der Erfindung liegt darin, eine Vorrichtung zu schaffen, die eine vorausschauende Wartung ermöglicht und die gleichzeitig die Arbeitsbelastung für die die Bediener reduziert.

Weiterhin soll die Erfindung den Neckring positionsgenau ohne verschleissbehaftete Bauteile ausrichten und halten können.

Weiterhin soll die Erfindung die einfache Einstellung und Optimierung der Plungerkühlung im Zusammenhang mit der Kühlkammer ermöglichen.

Die Aufgabe wird gelöst durch die Merkmale der Ansprüche 1-5.

Beispiele und Zahlenangaben sind in dieser Beschreibung rein exemplarisch und in keiner Weise ausschließlich oder einschränkend gemeint.

Die Erfindung betrifft eine Vorrichtung zur Herstellung von Hohlkörpern aus einer Glasschmelze mit einer der Aufnahme eines Tropfens einer Glasschmelze dienenden und den Glaskörper formenden Vorform und einem den Glaskörper aufnehmenden Neckring eines Neckringmechanismus sowie mit einer Kühleinrichtung zur Kühlung eines Plungers, wobei der Plunger mittels eines Antriebs eines Plungermechanismus innerhalb des Neckrings axial zur Vorform bewegbar ist.

Die Vorrichtung zur Herstellung von Hohlkörpern aus einer Glasschmelze kann eine Presseinrichtung und eine Blaseinrichtung umfassen. Weiterhin ist auch eine Kombination beider in Form einer Press-Blaseinrichtung möglich. Im Weiteren wird vereinfachend von einer Presseinrichtung ausgegangen. Bestandteile der Presseinrichtung sind vorzugsweise unter anderem eine Vorform und ein Plunger sowie ein Neckring. Es ist bekannt, dass der Glastropfen mit Hilfe der wenigstens einen Presseinrichtung unter Zusammenwirken von Vorform, Neckring und Plunger zum Kölbel gepresst wird.

Im Sinne der vorliegenden Erfindung ist der Plunger ein Bauteil, mit dem in einer Vorrichtung zur Herstellung von Hohlkörpern aus einer Glasschmelze in einem Hohlraum zwischen einer Vorform und einem Neckring ein Glastropfen zum einen Kölbel umgeformt wird.

Unter Servoantrieb im Sinne der Erfindung wird insbesondere jeglicher Antrieb mit elektronischer Lage-, Geschwindigkeits- oder Momentregelung oder eine Kombination derselben verstanden. Der Servoantrieb und seine verschiedenen Ausführungsformen sind an sich bekannt. Die Verwendung eines Servoantriebes ermöglicht eine vorausschauende Wartung. Zu jeder Produktionseinstellung sind die aktuellen Betriebszustände, Grenzwerte, Schleppfehler und/oder Stromaufnahmen speicherbar. Referenzdaten werden mit Daten des aktuellen Betriebszustands verglichen. Auf diese Weise können Meldungen und Warnungen vor Eintritt eines Störfalls generiert werden. Überprüfungen oder Wartungen des Systems werden vor dem Störfall ausgelöst, wodurch Revisionen planbar sind und Produktionsausfälle und Reparaturkosten minimiert werden können.

Durch den prinzipiell gleichartigen Aufbau der Servoantriebe können die entsprechenden Maschinenbauteile kostengünstig hergestellt, standardisiert und auch gegebenenfalls ausgetauscht werden. Die Servoantriebe können in verschiedenen Maschinenapparaturen sowie an verschiedenen Stellen in der räumlichen Anordnung der Gesamtmaschine zur Herstellung von Hohlkörpern aus einer Glasschmelze eingesetzt werden. Dies reduziert die Investitionskosten durch geringere Ausgaben für Ersatzteile und es erhöht die Anlagenverfügbarkeit durch Standardisierung.

Weiterhin wird dadurch bewerkstelligt, dass die im Stand der Technik notwendigen Kupplungs-, Bremskombinationen, die damit verbundene Störanfälligkeit und der Wartungsaufwand vemieden werden können. Damit einhergehender Produktionsausfall wird ebenfalls vermieden.

Der Neckring ist zwischen Plunger und Vorform angeordnet; seine Funktion ist es, den Vorformling bzw. den Kölbel für den Zeitraum von der Vorformung bis zur Entnahme des Hohlkörpers durch den Takeout aufzunehmen und zu transportieren.

Der Einsatz wenigstens eines Servomotors zum Antrieb des Plungers bewirkt, dass der Plunger während des Glasherstellungsprozesses erfindungsgemäß jeweils stufenlos vertikal bewegbar ist. Bevorzugt ist der Plunger mithilfe wenigstens eines Servoantriebs stufenlos relativ zu Bestandteilen der Vorrichtung zur Herstellung von Hohlkörpern bewegbar. Unter einer stufenlosen Bewegung ist eine kontrollierte Bewegung zu verstehen, in der der Plunger jede beliebige Position zwischen zwei Endstellungen oder Zwischenstellungen einnehmen kann. Die Erfindung lässt jegliche Position des Plungers zwischen einer oberen Endstellung und einer unteren Endstellung zu. In der oberen Endstellung befindet sich die Plungerspitze über dem oberen Rand des Hohlkörpers und ermöglicht die Entnahme des in diesem Stadium geformten Kölbelkörpers. In der unteren Endstellung ist der Plunger bei vollendetem Pressvorgang vollständig in die Aufnahmeöffnung der Vorform eingefahren.

Nach Vorgabe der Erfindung ist es weiterhin bevorzugt, dass der Plunger nach erfolgter Formung des Hohlkörpers im Pressvorgang stufenlos und mit reproduzierbarer und einstellbarer Geschwindigkeit bewegbar ist.

Der Plunger kann dabei kontrolliert zunächst langsam und vorzugsweise daraufhin schnell aus der Vorform heraus bewegt werden. Das Herausfahren des Plungers aus der Vorform wird nicht mehr geprägt durch eine unkontrollierte schnelle Aufwärtsbewegung des pneumatisch angetriebenen Plungers, wie dies im Stand der Technik der Fall ist. Die Bildung eines Vakuums zwischen dem Plunger und dem Kölbel wird vermieden, wodurch ein Aufsaugen des Kölbels durch die Aufwärtsbewegung des Plungers unterbleibt. Die Erfindung ermöglicht, dass der Plunger besonders bevorzugt stufenlos, axial in die Aufnahmeöffnung der Vorform hineingefahren und aus dieser auch wieder herausgefahren werden kann.

Der erfindungsgemäße Einsatz servobetriebener Plunger führt weiterhin zu einer Verkürzung der Einstellung-und Optimierungsphase. Damit einher geht eine Steigerung der effektiven Produktionszeit.

Der Einsatz des wenigstens einen Servomotors zum Antrieb des Plungers ermöglicht zusätzlich eine verbesserte Kühlung des Plungers. Der Plunger kann besonders bevorzugt, in einer kontrollierten und stufenlosen Bewegung an wenigstens eine Kühlbohrung der wenigstens einen Kühleinrichtung herangefahren werden. Aufgrund der Erfindung ist es bevorzugt möglich, unterschiedliche Bereiche des Plungers unterschiedlich lange an wenigstens eine Kühlluftbohrung heran zu fahren. Der Plunger kann dadurch bereichsweise gekühlt werden, wobei die unterschiedlichen Bereiche des Plungers unterschiedlich lange der Kühlluft ausgesetzt werden können.

Eine weitere bevorzugte Ausführungsform der Erfindung sieht vor, dass der Plunger nach Vollendung des Pressvorgangs der Glasschmelze innerhalb der Aufnahmeöffnung der Vorform unabhängig von der unteren- bzw. von der oberen Endstellung geringfügig von der Glasschmelze abgelöst werden kann. Der Kontakt zwischen dem Plunger und der Glasschmelze wird unterbrochen. Der Plunger kann dem Kölbel die Hitze weit feinfühliger entziehen, als dies in der oberen Endstellung des Plungers möglich ist. Dadurch, dass der Plunger erfindungsgemäß kontrolliert bewegbar ist, ist der Plunger graduell vom Kölbel ablösbar. Der Abstand des Plungers zum Kölbel innerhalb der Aufnahmeöffnung der Vorform kann beliebig verändert werden. Analog entzieht der Plunger erfindungsgemäß durch einen stufenlos einstellbaren Abstand zum Kölbel kontrolliert dem Kölbel Wärme und nimmt wiederum analog selbst vom Kölbel Wärme auf.

Bevorzugt kann durch den einstellbaren Abstand die Formung des Kölbels durch Vermeidung eines Leerhubes zeitlich wesentlich schneller erfolgen. Durch diese Zeiteinsparung wird eine Leistungssteigerung und/oder eine Qualitätssteigerung durch den Zugewinn an verfügbarer Formungszeit erreicht.

Desweitern kann der Glastropfen mit geringerem Temperaturabfall verarbeitet werden.

Der erfindungsgemäße servoelektrische Plungerantrieb ermöglicht weiterhin eine Steigerung der effektiven Produktionszeit durch Verkürzung der bisher erforderlichen Einstellphase sowie durch Verkürzung der Optimierungsphase. Die Erfindung erweist sich auch schon deshalb als vorteilhaft, da das Gefährdungspotenzial für die Bedienungsmannschaft weiter gravierend reduziert werden kann. Aufgrund einer automatischen Übertragung der Einstellungen auf die übrigen Segmente ist es nicht mehr erforderlich, dass der Maschinenbediener in die laufende Maschine zur Glasherstellung eingreifen muss. Beispielhaft können durch den servoelektrischen Plungerantrieb bei einer Maschine mit 18 Sektionen ca. 54 manuelle Eingriffe an der rotierenden Maschine eliminiert werden.

Erfindungsgemäß ist ein wenigstens ein Servoantrieb vorgesehen, der eine stufenlose Bewegung des Plungers innerhalb des Neckrings ermöglicht.

Der Neckringmechanismus weist wenigstens einen inneren Neckring und wenigstens einen äußeren Neckring auf, welche mittels Schrauben am Neckringmechanismus befestigt sind.

Der Neckringmechanismus weist vorzugsweise wenigstens einen inneren Neckring und wenigstens einen äußeren Neckring auf, welche schraubenlos am Neckringmechanismus befestigt sind.

Die Erfindung ermöglicht, dass der Plunger besonders bevorzugt stufenlos, axial in die Aufnahmeöffnung der Vorform hineingefahren und aus dieser auch wieder herausgefahren werden kann.

Nach einer weiteren bevorzugten Ausführungsform der Erfindung ist der Antrieb des Plungers ein servoelektrischer Antrieb. Der Servoantrieb wird eingesetzt, um die im Stand der Technik verwendeten großvolumigen pneumatischen Zylinder zu ersetzen. Servoelektrische Antriebe sind zum Beispiel als Linearmotoren, Torquemotoren, konventionelle Motoren mit Ritzel-Zahnstange, Kniehebel-, Kurvenscheiben- oder Kurbelantrieb ausgeführt. Vorzugsweise der Ritzel-Zahnstangenantrieb kann unrunde Zahnräder umfassen. Auf diese Weise kann der Servoantrieb insbesondere bei schnellen Bewegungen, die wenig Kraft benötigen und bei langsamen Bewegungen, bei denen eine hohe Antriebskraft erforderlich ist besonders effizient ausgelegt werden. Der Vorteil einer derartigen Konstruktionsweise besteht darin, dass die für den Antrieb des Plungers erforderliche Leistung auch von einem leistungsreduzierten Servomotor bereitgestellt werden kann. Hierdurch liefert die Erfindung einen weiteren Beitrag zur Erzielung von Energieeffizienz. Zusätzlich können im Bereich des Plungermechanismus weitere Bauteile standardisiert werden. Der leistungsreduzierte Antriebsmotor kann effektiv an verschiedenen Stellen der Maschinen zur Glasherstellung eingesetzt werden. Investitionskosten und Ausgaben für Ersatzteile können durch die Standardisierung gesenkt werden. Insgesamt gesehen erhöht sich die Anlagenverfügbarkeit der Vorrichtung zur Herstellung von Hohlkörpern aus einer Glasschmelze.

Der servoelektrische Antrieb kann insbesondere als dezentraler Antrieb ausgebildet sein. Hierdurch sind Schaltschränke, welche einer hohen Temperaturbelastung ausgesetzt sind, nicht weiter erforderlich. Auch wird insbesondere für Wartungsarbeiten der Zugang zu z.B. sich im inneren Bereich der Maschine befindlichen Bauteile erleichtert.

Weiterhin ist bevorzugt, dass der servoelektrische Antrieb ein Torquemotor und/oder ein Linearmotor ist. Insbesondere bevorzugt ist ein Torquemotor, wenn die Antriebskinematik die Antriebsenergie in rotatorischer Form benötigt. Weiter kommt als geeignet ein konventioneller Motor mit Ritzel-Zahnstange in Betracht. Diese Antriebe können weiter bevorzugt Kniehebelgetriebe aufweisen. Diese Antriebe können weiter bevorzugt Gewindespindel/Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Ausgestaltungen des Servoantriebs gelten sinngemäß auch für die weiteren erfindungsgemäß vorgesehenen Servoantriebe.

In einer weiteren bevorzugten Ausführungsform wird ein servopneumatischer und/oder servohydraulischer Antrieb eingesetzt.

Weiterhin wird bevorzugt, dass alle Antriebselemente miteinander synchronisierbar sind.

In einer anderen bevorzugten Variante der Erfindung sind der äußere Neckring mehrteilig und/oder der jeweils innere Neckring des Neckringmechanismus einteilig ausgebildet. Bei bekannten Vorrichtungen zur Herstellung von Hohlkörpern aus einer Glasschmelze ist der innere Neckring des Neckringmechanismus in der Regel einteilig ausgebildet. Der innere Neckring wird von oben in den Neckringhalter eingeschraubt. Dies erfordert eine vorausgehende Demontage des gesamten Neckringmechanismus. Dieser Arbeitsgang ist sehr zeitaufwändig und bedeutet aufgrund des hohen Gewichts des Neckringmechanismus eine enorme zusätzliche Arbeitsbelastung für die Maschinenbediener. Aufgrund einer prozessbedingten hohen Arbeitstemperatur muss der Neckringmechanismus vor einer Montage abgekühlt werden. Die Erfindung sieht daher am äußeren, mehrteiligen Neckring vorzugsweise einen verbesserten Öffnungsmechanismus vor. Ein vergrößerter Öffnungswinkel des äußeren mehrteiligen Neckrings erlaubt es, den inneren einteiligen Neckring von außen in den äußeren Neckring einzuschrauben. Besonders bevorzugt ist es darüber hinaus, dass die mehreren Bauteile des äußeren Neckrings ohne weitere Schraubenverbindungen am Neckringmechanismus befestigt werden können. Hierdurch werden die oben geschilderten aufwändigen und belastenden Reparatur-und Demontagearbeiten erheblich vereinfacht sowie eine Erhöhung der Produktionskapazität erreicht.

Der Plunger ist vorzugsweise mithilfe einer automatischen Klemmung am Plungermechanismus befestigt. Ein Werkzeug ist zum Befestigen oder zum Lösen des Plungers nicht mehr erforderlich. Die Klemmung kann vielmehr pneumatisch oder federbetätigt aktiv durch Knopfdruck geöffnet oder geschlossen werden. Vor Lösung der Klemmung wird das in der Kühlkammer befindliche Restwasser mittels eines Luftimpulses ausgestoßen.

Nach einer weiteren bevorzugten Ausführungsform der Erfindung ist, bevorzugt neben dem Servoantrieb des Plungers, der Antrieb des Neckrings ein Servoantrieb, insbesondere ein servoelektrischer Antrieb.

Für diesen gelten analog dieselben Vorteile wie für den Einsatz eines solchen Antriebs im Zusammenhang mit dem Plunger, so dass die hierzu erfolgten obigen Ausführungen auch zum Gegenstand der Offenbarung im Zusammenhang mit dem Neckring erfolgen.

Servoelektrische Antriebe sind zum Beispiel als Linearmotoren, Torquemotoren, konventionelle Motoren mit Ritzel-Zahnstange, Kniehebel-, Kurvenscheiben- oder Kurbelantrieb ausgeführt. Vorzugsweise der Ritzel-Zahnstangenantrieb kann unrunde Zahnräder umfassen. Auf diese Weise kann der Servoantrieb insbesondere bei schnellen Bewegungen, die wenig Kraft benötigen und bei langsamen Bewegungen, bei denen eine hohe Antriebskraft erforderlich ist besonders effizient ausgelegt werden. Der Vorteil einer derartigen Konstruktionsweise besteht darin, dass die für den Antrieb des Neckrings erforderliche Leistung auch von einem leistungsreduzierten Servomotor bereitgestellt werden kann. Hierdurch liefert die Erfindung einen weiteren Beitrag zur Erzielung von Energieeffizienz. Zusätzlich können im Bereich des Neckringmechanismus weitere Bauteile standardisiert werden. Der leistungsreduzierte Antriebsmotor kann effektiv an verschiedenen Stellen der Maschinen zur Glasherstellung eingesetzt werden. Investitionskosten und Ausgaben für Ersatzteile können durch die Standardisierung gesenkt werden. Insgesamt gesehen erhöht sich die Anlagenverfügbarkeit der Vorrichtung zur Herstellung von Hohlkörpern aus einer Glasschmelze.

Der servoelektrische Antrieb kann insbesondere als dezentraler Antrieb ausgebildet sein. Hierdurch sind Schaltschränke, welche einer hohen Temperaturbelastung ausgesetzt sind, nicht weiter erforderlich. Auch wird insbesondere für Wartungsarbeiten der Zugang zu z.B. sich im inneren Bereich der Maschine befindlichen Bauteile erleichtert.

Weiterhin ist bevorzugt, dass der servoelektrische Antrieb ein Torquemotor ist. Insbesondere bevorzugt ist ein Torquemotor, wenn die Antriebskinematik die Antriebsenergie in rotatorischer Form benötigt.

Weiter kommt als geeignet ein Zahnriemen-, und/oder ein Ketten- und/oder ein Zahnradantrieb in Betracht.

In einer weiteren bevorzugten Ausführungsform wird ein servopneumatischer und/oder servohydraulischer Antrieb eingesetzt.

Weiterhin wird bevorzugt, dass alle Antriebselemente miteinander synchronisierbar sind.

Die servoangetriebene Neckringdrehung bei der Formung des Kölbels und/oder bei der drehenden und/oder feststehenden Formung des Hohlkörpers und/oder bei der Entnahme des Hohlkörpers kann eine definierte Position einnehmen. Dadurch kann insbesondere die Entnahme von unrunden, ovalen, asymmetrischen und vielflächigen Hohlkörpern, welche eine diesen Formen angepasste Kontur der Greiferzange erfordert, verbessert werden.

Weiterhin wird dadurch bewerkstelligt, dass die im Stand der Technik notwendigen Kupplungs-, Bremskombinationen, die damit verbundene Störanfälligkeit und der Wartungsaufwand vermieden werden können. Damit einhergehender Produktionsausfall wird ebenfalls vermieden.

Im Folgenden soll die Erfindung beispielhaft, ohne Beschränkung der Allgemeinheit anhand eines in der Zeichnung dargestellten Ausführungsbeispiels näher erläutert werden.

Hierbei zeigen jeweils in schematischer Darstellung:
Fig. 1 einen Plungermechanismus, der zum Antrieb eines Plungers einen Servoantrieb aufweist und
Fig. 2 einen Hohlkörper während der Formung jeweils in der Tropfenzuführungseinrichtung, in der Pressposition und in der Blaseinrichtung der erfindungsgemäßen Vorrichtung,

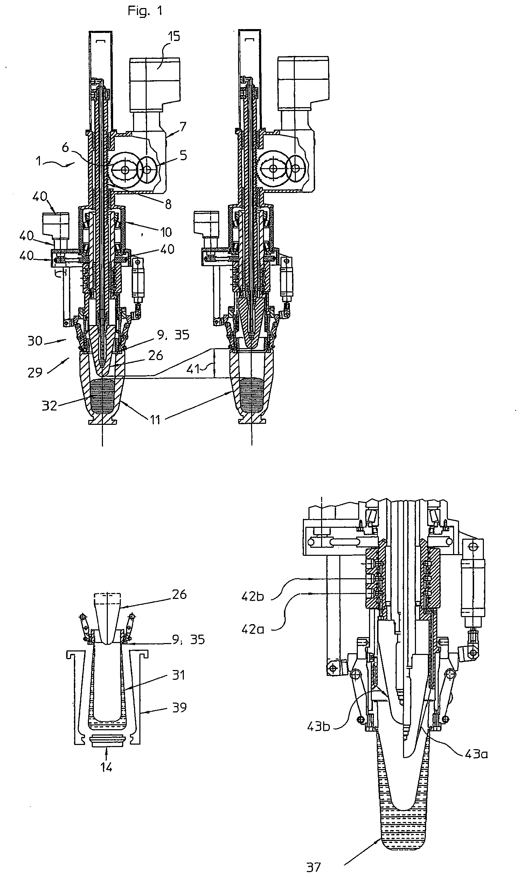

Fig. 1 zeigt einen Plungermechanismus 1 als Bestandteil einer Presseinrichtung 29 einer Vorrichtung zur Herstellung von Hohlkörpern aus einer Glasschmelze 27. Der Plungermechanismus 1 weist einen Servomotor 15 auf, der den Plunger 26 betätigt. Der Servomotor 15 ist als dezentraler Antrieb ausgebildet und steht mit einem Ritzel 5 mit einem Zahnrad 6 eines Getriebes 7 in Wirkverbindung. Das Ritzel 5 ist in der Fig. 1 als unrundes Zahnrad ausgebildet. Das Getriebezahnrad 6 greift mit seinen Zähnen in die Verzahnung einer Zahnstange 8 ein. An ihrer vom Getriebe 7 abgewandten Stirnseite ist die Zahnstange 8 mit einem Plunger 26 verbunden. Der Plunger 26 wird axial innerhalb des Plungerführungsgehäuses 10 geführt. Mithilfe des Servomotors 15 kann der Plunger 26 kontinuierlich und stufenlos in die Öffnung einer Vorform 11 hereingefahren und wieder herausbewegt werden. In dem zum Plunger 26 benachbarten Bereich der Zahnstange 8 ist eine Blaseinrichtung 30 angeordnet, mit deren Hilfe Druckluft zwischen den Plunger 26 und einem Kölbel 37 eingeführt wird. An der oberen Stirnseite des Plungers 26, ist eine nicht dargestellte Klemmung vorgesehen, mit der der Plunger 26 an der unteren Verlängerung der Zahnstange 8 werkzeuglos befestigt ist.

Die Fig 1. zeigt weiterhin mit 40 den Drehantrieb 40 des Neckring 35 in der Ausführungsform Servoantrieb mit Zugmittel in Form eines Riemens, z. B. eines Zahnriemens.

Der Abstand des servoangetrieben Plungers ist zu dem in der Vorform befindlichen Glastropfen vor dem Pressvorgang frei wählbar. Dadurch wird besonders vorteilhaft der in Fig. 1 mit der Bezugsziffer 41 dargestellte Leerhub vermieden.

Die Kühlluftmenge ist in Abhängigkeit von der Position des Plungers (26) zur Kühleinrichtung (42a, 42b) variierbar. Weiterhin ist in Fig. 1 dargestellt, dass die Vorrichtung mehrere unabhängig voneinander steuerbare Kühlluftaustritte (43a, 43 b) hat.

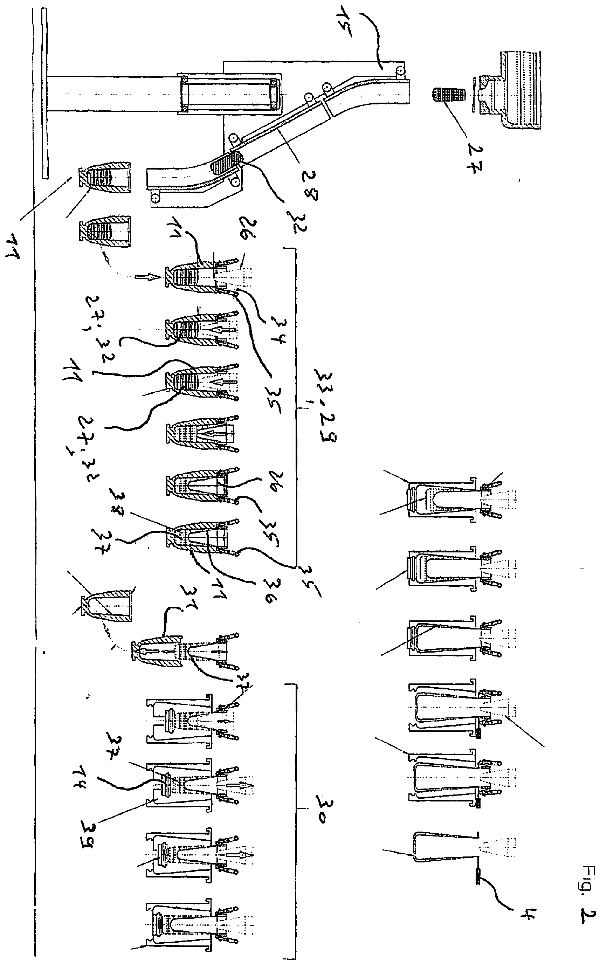

Fig. 2 zeigt eine Glasschmelze 27, eine Tropfenzuführungseinrichtung 28, sowie eine Presseinrichtung 29 und eine Blaseinrichtung 30 der erfindungsgemäßen Vorrichtung zur Herstellung von Hohlkörpern 31. Im Bereich der Glasschmelze 27 ist ein Tropfen 32 einer Glasschmelze 27 dargestellt, der nach Durchlauf einer Zuführungseinrichtung 28 in eine, in einer Tropfenzuführungspositionen 28 befindliche, Vorform 11 eingespeist wird. Die Zuführungseinrichtung 28 weist dabei einen mit 15 bezeichneten Servoantrieb auf. Im Bereich der Presseinrichtung 29 befindet sich der Tropfen 32 in Pressposition 33. In Pressposition 33 fährt ein Plunger 26 in die Vorform 11 ein. Am oberen offenen Rand 34 der Vorform 11 ist ein Neckring 35 angeordnet. Entgegen der Bewegung des Plungers 26 wird die Glasschmelze 27 in der Pressposition 33 in der Vorform 11 zwischen der Außenwand des Plungers 26 und der Innenwand 36 der Vorform 11 in Richtung des Neckrings 35 gepresst. Auf diese Weise entsteht im Inneren der Vorform 11 ein Vorformling (Kölbel 37). In der Ablösungsstellung 38, vor dem Überwechseln des Kölbels 37 von der Presseinrichtung 29 in die Blaseinrichtung 30 wird der Kölbel 37 vom Neckring 35 gehalten und die Vorform 11 vom Kölbel 37 abgelöst. In der Blaseinrichtung 30 umgreift die Fertigform 39 den Kölbel 37. In der Fertigform 39 ist in Fig. 4 ein Boden 14 dargestellt, der die durch die Schwerkraft und die Zuführung von Druckluft bedingte Längenausdehnung des Kölbels 37 begrenzt. Eine mit 4 bezeichnete Greiferzange übernimmt den Kölbel aus seiner Halterung im Neckring und führt ihn der weiteren Bearbeitung zu.

### Bezugsziffern

- 1: Plungermechanismus
- 4: Greiferzange
- 5: Ritzel
- 6: Getriebezahnrad
- 7: Getriebe
- 8: Zahnstange
- 9: äußerer Neckring
- 10: Plungerführungsgehäuse
- 11: Vorform
- 14: Boden
- 15: Servoantrieb
- 26: Plunger
- 27: Glasschmelze
- 28: Tropfenzuführungseinrichtung
- 29: Presseinrichtung
- 30: Blaseinrichtung
- 31: Hohlkörper
- 32: Tropfen
- 33: Pressposition
- 34: offener Rand der Vorform
- 35: Neckring
- 36: Innenwand der Vorform
- 37: Vorformling bzw. Kölbel
- 38: Ablösestellung
- 39: Fertigform
- 40: Servoantrieb
- 42a, 42b: Kühleinrichtung
- 43a, 43b: Kühlluftaustritte

## Patentansprüche

1. Vorrichtung zur Herstellung von Hohlkörpern (31) aus einer Glasschmelze (27) mit
- wenigstens einem Plunger (26) und
- einem Antrieb (15), der als Servoantrieb (15) ausgebildet ist,
- einem, den Kölbel (27) aufnehmenden Neckring (35) und
- einem Antrieb (40) des Neckrings (35), der als Servoantrieb ausgebildet ist,
- einer Vorform (11) zur Aufnahme einer Glasschmelze (27),
- wobei der Servoantrieb (15) zur stufenlosen Bewegung des Plungers (26) innerhalb des Neckrings (35) ausgebildet ist und
- wobei sich der Plunger (26) zur Vorform (11) bewegt,
**dadurch gekennzeichnet, dass** der Abstand des servoangebriebenen Plungers (26) zu dem in der Vorform (11) befindlichen Glastropfen vor dem Pressvorgang derart einstellbar ist, dass der Abstand frei wählbar ist.

2. Vorrichtung nach Anspruch 1, **dadurch gekennzeichnet, dass** die Vorrichtung eine Kühleinrichtung zur Kühlung eines Plungers (26) aufweist und der Servoantrieb (15) zur stufenlosen Bewegung des Plungers (26) gegenüber wenigstens einer Kühlbohrung der Kühleinrichtung ausgebildet ist.

3. Vorrichtung nach Anspruch 1 oder 2, **dadurch gekennzeichnet, dass** sie zur Aufnahme einer Glasschmelze (27) eine Vorform (11) sowie eine Kühleinrichtung zur Kühlung eines Plungers (26) aufweist, wobei sich der Plunger (26) zur Vorform (11) bewegt.

4. Vorrichtung nach einem und/oder mehrerer der vorstehenden Ansprüche, **dadurch gekennzeichnet, dass** diese einen den Kölbel (37) aufnehmenden Neckring (35) sowie eine Kühleinrichtung zur Kühlung eines Plungers (26) aufweist, wobei sich der Plunger (26) innerhalb des Neckrings (35) bewegt.

5. Vorrichtung nach einem und/oder mehreren der vorhergehenden Ansprüche, **dadurch gekennzeichnet, dass** der Antrieb (15) des Plungers (26) ein servoelektrischer Antrieb (15), insbesondere ein dezentraler Antrieb oder ein Torquemotor oder ein Linearmotor oder ein Kurbelantrieb oder ein konventioneller Motor mit Ritzel-Zahnstange oder ein Kniehebel- oder ein Kurvenscheibenantrieb oder ein Zahnriemen- und/oder Ketten- und/oder ein Zahnradantrieb ist.

6. Vorrichtung nach einem und/oder mehreren der vorhergehenden Ansprüche,
**dadurch gekennzeichnet, dass** der Plunger (26) einen servopneumatischen und/oder servohydraulischen Antrieb (15) aufweist.

7. Vorrichtung nach einem und/oder mehreren der vorhergehenden Ansprüche,
**dadurch gekennzeichnet, dass** der Antrieb (40) des Neckrings (35) ein servoelektrischer Antrieb (40), insbesondere ein dezentraler Antrieb, ein Torquemotor und/oder ein Linearmotor, ein Zahnriemen- und/oder Ketten- und/oder ein Zahnradantrieb ist.

8. Vorrichtung nach einem und/oder mehreren der vorhergehenden Ansprüche,
**dadurch gekennzeichnet, dass** der Neckring (35) einen servopneumatischen und/oder servohydraulischen Antrieb (40) aufweist.

9. Vorrichtung nach einem oder mehreren der vorhergehenden Ansprüche, **dadurch gekennzeichnet, dass** alle Antriebselemente synchronisierbar sind.

10. Vorrichtung nach einem und/oder mehreren der vorstehenden Ansprüche,
**dadurch gekennzeichnet, dass** die Kühlluftmenge in Abhängigkeit von der Position des Plungers (26) zur Kühleinrichtung (42 a, 42 b) variierbar ist und/oder dass die Vorrichtung mehrere unabhängig voneinander steuerbare Kühlluftaustritte (43a, 43 b) hat.

11. Vorrichtung nach einem und/oder mehreren der vorstehenden Ansprüche,
**dadurch gekennzeichnet, dass** der Plunger (26) mithilfe einer automatischen Klemmung am Plungermechanismus (1) befestigt sein kann.

## Claims

1. Device for producing hollow bodies (31) from a glass melt (27) with
- at least one plunger (26), and
- a drive (15) configured in the form of a servo drive (15),
- a neck ring (35) receiving the parison (27), and
- a drive (40) of the neck ring (35) configured in the form of a servo drive,
- a blank mold (11) for receiving a glass melt (27),
- wherein the servo drive (15) is configured to move the plunger (26) within the neck ring (35) in a stepless manner, and
- wherein the plunger (26) moves towards the blank mold (11),
**characterized in that** the distance of the servo-driven plunger (26) from the glass gob in the blank mold (11) can be adjusted before the pressing process in such a way that the distance is freely selectable.

2. Device according to claim 1, **characterized in that** the device has a cooling device for cooling a plunger (26) and the servo drive (15) is configured to move the plunger (26) in a stepless manner in relation to at least one cooling hole of the cooling device.

3. Device according to claim 1 or 2, **characterized in that** it has a blank mold (11) for receiving a glass melt (27) as well as a cooling device for cooling a plunger (26), wherein the plunger (26) moves towards the blank mold (11).

4. Device according to one and/or more of the preceding claims, **characterized in that** it has a neck ring (35) receiving the parison (37) as well as a cooling device for cooling a plunger (26), wherein the plunger (26) moves within the neck ring (35).

5. Device according to one and/or more of the preceding claims, **characterized in that** the drive (15) of the plunger (26) is a servo-electric drive (15), in particular a decentralized drive or a torque motor or a linear motor or a crank drive or a conventional motor with a rack and pinion or a toggle lever or a cam disk drive or a toothed belt and/or a chain and/or a gear drive.

6. Device according to one and/or more of the preceding claims, **characterized in that** the plunger (26) has a servo-pneumatic and/or servo-hydraulic drive (15).

7. Device according to one and/or more of the preceding claims, **characterized in that** the drive (40) of the neck ring (35) is a servo-electric drive (40), in particular a decentralized drive, a torque motor and/or a linear motor, a toothed belt and/or a chain and/or a gear drive.

8. Device according to one and/or more of the preceding claims, **characterized in that** the neck ring (35) has a servo-pneumatic and/or servo-hydraulic drive (40).

9. Device according to one or more of the preceding claims, **characterized in that** all drive elements are capable of being synchronized.

10. Device according to one and/or more of the preceding claims, **characterized in that** the quantity of cooling air can be varied depending on the position of the plunger (26) in relation to the cooling device (42a, 42b) and/or that the device has a plurality of cooling air outlets (43a, 43b) which can be controlled independently of each other.

11. Device according to one and/or more of the preceding claims, **characterized in that** the plunger (26) can be attached to the plunger mechanism (1) by means of an automatic clamping device.

## Revendications

1. Dispositif de fabrication de corps creux (31) à partir de verre en fusion (27), comportant au moins
- au moins un piston plongeur (26) et
- un entraînement (15) qui est réalisé sous forme de servomoteur (15),
- une bague de col (35) recevant la paraison (27) et
- un entraînement (40) de la bague de col (35) qui est réalisé sous forme de servomoteur,
- une préforme (11) destinée à recevoir du verre en fusion (27),
- le servomoteur (15) étant réalisé pour déplacer en continu le piston plongeur (26) à l'intérieur de la bague de col (35), et
- le piston plongeur (26) se déplaçant vers la préforme (11), **caractérisé en ce que** l'espace entre le piston plongeur (26) entraîné par servomoteur et la goutte de verre se trouvant dans la préforme (11) avant le processus de pressage est réglable de telle sorte que l'espace peut être librement choisi.

2. Dispositif selon la revendication 1, **caractérisé en ce que** le dispositif présente un dispositif de refroidissement pour refroidir un piston plongeur (26) et le servomoteur (15) est réalisé pour déplacer en continu le piston plongeur (26) vis-à-vis d'au moins un orifice de refroidissement du dispositif de refroidissement.

3. Dispositif selon la revendication 1 ou 2, **caractérisé en ce que** pour la réception de verre en fusion (27), il présente une préforme (11) ainsi qu'un dispositif de refroidissement pour refroidir un piston plongeur (26), le piston plongeur (26) se déplaçant vers la préforme (11).

4. Dispositif selon l'une ou plusieurs des revendications précédentes, **caractérisé en ce que** celui-ci présente une bague de col (35) recevant la paraison (37) ainsi qu'un dispositif de refroidissement pour refroidir un piston plongeur (26), le piston plongeur (26) se déplaçant à l'intérieur de la bague de col (35).

5. Dispositif selon l'une ou plusieurs des revendications précédentes, **caractérisé en ce que** l'entraînement (15) du piston plongeur (26) est un entraînement servoélectrique (15), en particulier un entraînement décentralisé ou un moteur à couple ou un moteur linéaire ou un entraînement à bielle ou un moteur traditionnel avec crémaillère et pignon ou un levier à genouillère ou un entraînement à disque à came ou un entraînement à courroie crantée et/ou par chaîne et/ou par roue dentée.

6. Dispositif selon l'une ou plusieurs des revendications précédentes, **caractérisé en ce que** le piston plongeur (26) présente un entraînement (15) servopneumatique et/ou servohydraulique.

7. Dispositif selon l'une ou plusieurs des revendications précédentes, **caractérisé en ce que** l'entraînement (40) de la bague de col (35) est un entraînement servoélectrique (40), en particulier un entraînement décentralisé, un moteur à couple et/ou un moteur linéaire, entraînement à courroie crantée et/ou par chaîne et/ou par roue dentée.

8. Dispositif selon l'une ou plusieurs des revendications précédentes, **caractérisé en ce que** la bague de col (35) présente un entraînement (40) servopneumatique et/ou servohydraulique.

9. Dispositif selon l'une ou plusieurs des revendications précédentes, **caractérisé en ce que** tous les éléments d'entraînement peuvent être synchronisés.

10. Dispositif selon l'une ou plusieurs des revendications précédentes, **caractérisé en ce que** la quantité d'air de refroidissement est variable en fonction de la position du piston plongeur (26) par rapport au dispositif de refroidissement (42a, 42b) et/ou **en ce que** le dispositif a plusieurs sortie d'air de refroidissement (43a, 43b) qui peuvent être commandées indépendamment les unes des autres.

11. Dispositif selon l'une ou plusieurs des revendications précédentes, **caractérisé en ce que** le piston plongeur (26) peut être fixé sur le mécanisme de piston plongeur (1) à l'aide d'un serrage automatique.
